# FASCICULE DE BREVET EUROPEEN

(11) **EP 2 448 816 B1**
(45) Date de publication et mention de la délivrance du brevet: **18.01.2017**
(21) Numéro de dépôt: 10729869.7
(22) Date de dépôt: 05.07.2010
(51) Int. Cl.: B64C 25/16, B64C 25/18

(54) **DISPOSITIF POUR MANOEUVRER DES TRAPPES FERMANT LA SOUTE D'UN ATTERRISSEUR D'AERONEF**
FAHRWERKSKLAPPENBETÄTIGUNGSVORRICHTUNG
LANDING GEAR DOOR ACTUATING MECHANISM

(30) Priorité: 03.07.2009 FR 0903273
(43) Date de publication de la demande: 09.05.2012
(73) Titulaire: Safran Landing Systems, 78140 Vélizy-Villacoublay (FR)
(72) Inventeur: ALONZO, Christian, 91380 Chilly Mazarin (FR); BRYANT, Chris, Pickering, Ontario L1V 1S5 (CA); LAUNAY, Arnaud, 78320 Levis Saint Nom (FR); ROUCHOUSE, Frédéric, 78140 Vélizy-Villacoublay (FR)
(74) Mandataire: Parzy, Benjamin Alain
(86) Numéro de dépôt international: PCT/EP2010/059594
(87) Numéro de publication internationale: WO 2011/000971

(56) Documents cités:
- FR-A- 2 886 620
- US-A- 2 406 710
- US-A- 2 452 251
- US-A- 2 630 990

## Description

L'invention est relative à un dispositif pour manoeuvrer des trappes fermant la soute d'un atterrisseur d'aéronef.

### ARRIERE-PLAN TECHNOLOGIQUE DE L'INVENTION

En général, l'atterrisseur et les trappes de la soute correspondante sont manoeuvrés par des actionneurs distincts. Une logique séquentielle garantit l'ouverture des trappes avant la manoeuvre de l'atterrisseur, puis la fermeture de celles-ci.

Sur certains aéronefs, comme le DC3, les trappes des atterrisseurs principaux sont rappelées vers la position ouverte par un organe élastique qui maintient les trappes ouvertes lorsque l'atterrisseur est en position déployée. Lors du relevage de l'atterrisseur, celui-ci accoste puis entraîne un cavalier lié aux trappes par des bielles, provoquant la fermeture de ces dernières à l'encontre de l'organe élastique alors que l'atterrisseur termine sa course. A la descente de l'atterrisseur, l'organe élastique force le cavalier à suivre l'atterrisseur dans son mouvement, provoquant ainsi l'ouverture des trappes. Pour une position donnée de la course de l'atterrisseur, le cavalier parvient en butée, et est donc immobilisé, de sorte que les trappes restent alors immobiles en position ouverte alors que l'atterrisseur continue son mouvement vers la position déployée. Une telle disposition permet de supprimer l'actionneur de manoeuvre des trappes, mais ne permet pas la fermeture des trappes lorsque l'atterrisseur est en position déployée.

On connait, notamment des documents US 2 406 710, US 2 452 251 des dispositifs selon le préambule de la revendication 1, dans lesquels le mouvement de l'atterrisseur entre une position stockée et une position déployée est mis à profit au moyen d'une liaison mécanique permanente entre la trappe et l'atterrisseur pour imprimer à la trappe un mouvement de va et vient.

Dans le document US 2 406 710, on provoque à l'aide d'un secteur denté la rotation d'un levier générateur articulé sur la structure de l'aéronef qui, en faisant un tour complet lors du mouvement de l'atterrisseur, imprime à la trappe le mouvement de va et vient recherché.

Dans le document US 2 452 251, on provoque à l'aide de l'atterrisseur la rotation d'un levier générateur articulé sur la structure de l'aéronef, d'abord dans un sens puis dans l'autre.

L'état de l'art est également illustré par le document US 2 630 990.

### OBJET DE L'INVENTION

L'invention vise à proposer un dispositif simple de manoeuvre des trappes, permettant la fermeture de celle-ci en fin de mouvement de l'atterrisseur.

### BREVE DESCRIPTION DE L'INVENTION

En vue de la réalisation de ce but, on propose un dispositif de manoeuvre d'au moins une trappe d'une soute d'atterrisseur d'aéronef, comprenant :
- un atterrisseur ;
- un point fixe d'un aéronef ;
- une trappe de soute d'aéronef ;

le dispositif comportant une liaison mécanique permanente entre la trappe et à l'atterrisseur, la liaison mécanique permanente étant agencée pour transformer un mouvement de l'atterrisseur entre une position stockée et une position déployée ou inversement en un mouvement de va et vient propre à provoquer une ouverture suivie d'une fermeture de la trappe lors du mouvement de l'atterrisseur entre lesdites positions. Selon l'invention, la liaison permanente comporte un levier générateur articulé sur un élément de l'atterrisseur et attelé à un point fixe de l'aéronef de façon à présenter, vis-à-vis de l'élément de l'atterrisseur, un mouvement de va et vient. Ainsi, l'atterrisseur lui-même est utilisé comme source de mouvement qui est transformé en mouvement de va et vient par la liaison mécanique permanente pour agir sur la trappe et ainsi assurer la fermeture des trappes systématique après que l'atterrisseur ait été manoeuvré. On prendra bien sûr garde à ce que lors de la manoeuvre de l'atterrisseur, la trappe s'ouvre suffisamment tôt et se ferme suffisamment tard pour ne pas risquer de contact entre l'atterrisseur et la trappe.

Le levier générateur est articulé sur l'atterrisseur, ce qui simplifie considérablement la conception de la soute, puisqu'il n'y a aucune articulation à prévoir sur la structure de celle-ci.

En outre, le mécanisme reste très simple, à base de bielles et de leviers, sans vérins à commander.

### BREVE DESCRIPTION DES FIGURES

L'invention sera mieux comprise à la lumière de la description qui suit des figures des dessins annexés, parmi lesquelles :
- la figure 1 est une vue en perspective d'un atterrisseur équipé d'un dispositif de manoeuvre de trappes selon l'invention, l'atterrisseur étant ici en position déployée ;
- la figure 2 est une vue en perspective de l'atterrisseur de la figure 1, illustré ici en cours de relevage ;
- la figure 3 est une vue en perspective de l'atterrisseur de la figure 1, illustré ici en position stockée ;

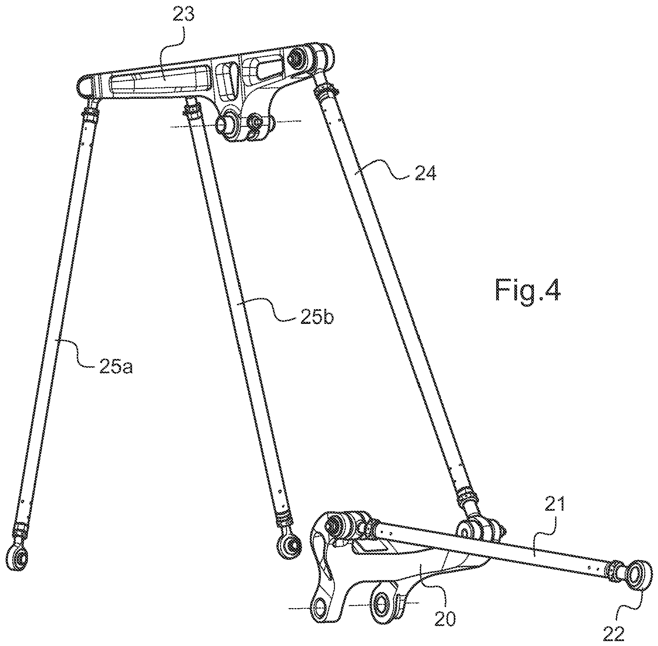

- la figure 4 est une vue en perspective de la liaison mécanique du dispositif de manoeuvre de trappes équipant l'atterrisseur illustré sur les figures 1 à 3.

### DESCRIPTION DETAILLEE DES FIGURES

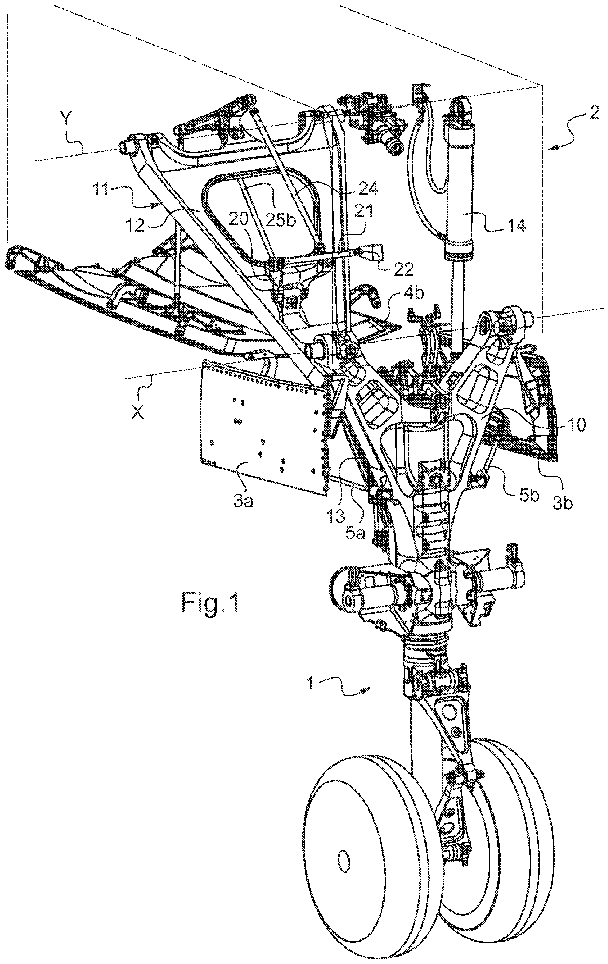

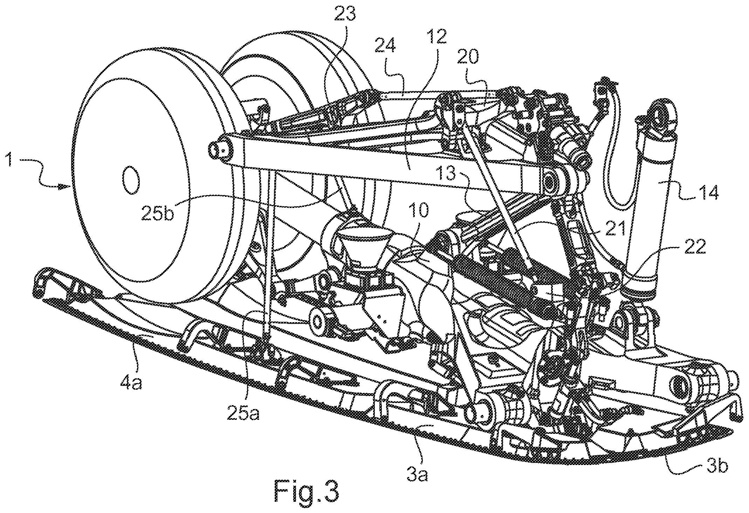

Comme cela est visible sur les figures 1 à 3, l'invention est ici décrite dans le cas particulier d'un atterrisseur 1 dont la soute 2 est fermée par quatre trappes, respectivement 3a, 3b, et 4a,
4b. Ici, les trappes 3a, 3b, 4a, 4b sont toute articulées sur l'un de leurs bords longitudinaux sur la structure de l'aéronef.

Les trappes 3a, 3b d'une part, et 4a, 4b d'autre part ont des cinématiques de manoeuvre différentes. En effets, les trappes 3a, 3b restent ouvertes lorsque l'atterrisseur 1 arrive en position déployée pour permettre au caisson de l'atterrisseur de saillir de l'aéronef, tandis que les trappes 4a, 4b se referment lorsque l'atterrisseur arrive en position déployée pour refermer substantiellement la soute 2.

Il est connu d'effectuer le mouvement des trappes 3a, 3b en les attelant chacune au caisson de l'atterrisseur à l'aide d'une simple bielle 5a, 5b. Ainsi, le mouvement de l'atterrisseur depuis la position stockée vers la position déployée (respectivement depuis la position déployée vers la position stockée est transmis aux trappes 3a, 3b pour effectuer un mouvement depuis la position fermée vers la position ouverte (respectivement depuis la position ouverte vers la position fermée).

Selon l'invention, le mouvement continu de l'atterrisseur de l'une vers l'autre de ses positions est utilisé pour générer un actionnement en va et vient des trappes 4a, 4b.

Pour les besoins de l'explication, on rappelle que l'atterrisseur 1 comporte ici un caisson 10 articulé sur la structure de l'aéronef selon un axe d'articulation horizontal X. Il est associé à une contrefiche briseuse 11 comportant ici un panneau supérieur 12 articulé sur la structure de l'aéronef selon un axe Y parallèle à l'axe d'articulation X du caisson 10. Le panneau 12 est attelé au caisson 10 par un bras 13 articulé au panneau 12 et au caisson 10 selon des axes parallèles à l'axe d'articulation X. Un organe de stabilisation maintient le panneau 12 et le bras 13 en position sensiblement alignée lorsque l'atterrisseur est en position déployée, ce qui stabilise le caisson 10, et donc la jambe de l'atterrisseur, en position déployée. Pour relever l'atterrisseur, un vérin de manoeuvre 14 attelé au caisson 10 d'une part et à la structure de l'aéronef d'autre part tire sur le caisson 10 pour, après que l'organe de stabilisation ait été déverrouillé, relever l'atterrisseur jusqu'à la position stockée. Lors de ce mouvement, l'alignement du panneau 12 et du bras 13 est brisé et la contrefiche se replie. Tout ceci est bien connu et n'est rappelé que pour les besoins de la description de l'invention.

On remarquera que lorsque l'atterrisseur se déplace de l'une à l'autre de ses positions, le panneau 12 de contrefiche 10 a un mouvement de rotation continu, sans rebroussement. Selon l'invention, ce mouvement sans rebroussement est exploité pour générer un mouvement de va et vient, qui sert à ouvrir et fermer les trappes 4a, 4b.

A cet effet, et comme cela est plus particulièrement visible à la figure 1, le panneau 12 de contrefiche est équipé d'un levier générateur 20 monté tournant sur le plateau selon un axe d'articulation parallèle à l'axe X. Une biellette de retenue 21 relie le levier générateur 20 à un point fixe 22 de la structure de l'aéronef. Le levier générateur 20 transmet son mouvement à un levier de renvoi 23 également monté pivotant sur le panneau 12 au moyen d'une tringle de transmission 24. Sur le levier de renvoi 23 sont attelées deux bielles 25a, 25b, attelées respectivement à la trappe 4a et à la trappe 4b.

L'ensemble ainsi décrit forme une liaison mécanique permanente entre l'atterrisseur et les trappes 4a, 4b, qui fonctionne de la façon suivante. Partant de la position stockée illustrée en figure 1, la jambe de l'atterrisseur commence à descendre vers sa position déployée en pivotant autour de l'axe X. Ce faisant, le panneau 12 pivote lui-même, ce qui provoque un pivotement du levier générateur 20 qui tend à la rapprocher du panneau 12. Ce mouvement est transmis au levier de renvoi 23 par la tringle de transmission 24, ce qui provoque le pivotement du levier de renvoi dans un sens tendant à pousser les bielles 25a, 25b, et donc à ouvrir les trappes 4a, 4b.

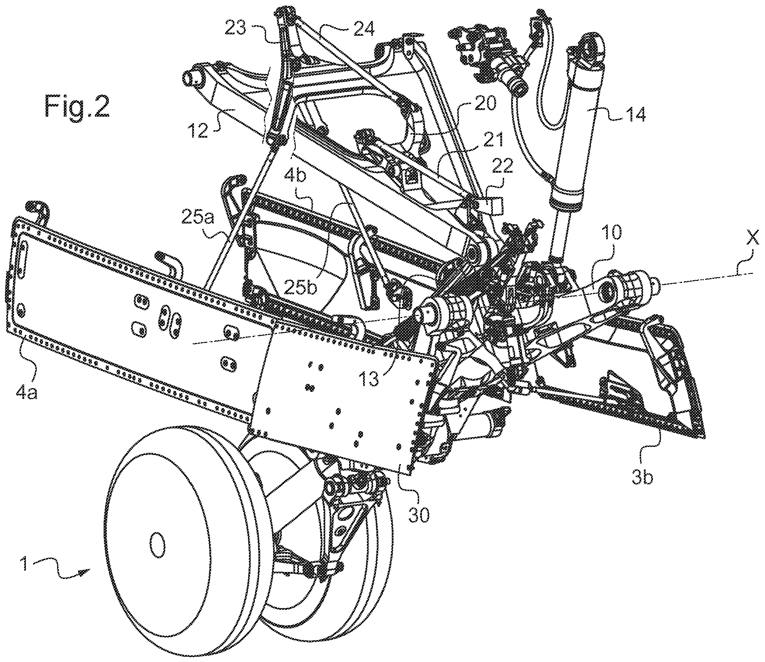

Les trappes 4a, 4b vont ainsi progressivement s'ouvrir pour laisser le passage aux roues portées par l'atterrisseur. Le mouvement de pivotement la jambe de l'atterrisseur et du panneau 12 va se poursuivre jusqu'à une position illustrée à la figure 2 dans laquelle le panneau 12 et la biellette de retenue vont s'étendre de façon sensiblement parallèle. Cette position correspondant sensiblement au rapprochement maximal du levier générateur 20 avec le panneau 12, et correspond donc sensiblement à la position d'ouverture maximale des trappes 4a, 4b.

Le mouvement se poursuivant, le levier générateur 20 va dès lors partir dans l'autre sens par rapport au panneau 12 et s'éloigner de celui-ci alors que le panneau 12 poursuit son mouvement de rotation dans le même sens. Ce demi-tour est alors transmis par la tringle 24 au levier de renvoi 23, qui va pivoter dans l'autre sens pour tirer sur les bielles 25a, 25b, et ainsi provoquer la fermeture des trappes 4a, 4b. Lorsque l'atterrisseur arrive en position déployée, les trappes se referment et viennent en appui contre leurs butées. Le dispositif est conçu de sorte qu'une tension soit maintenue dans les bielles 25a, 25b lorsque les trappes 4a, 4b sont en position fermée.

Bien sûr, lorsque l'atterrisseur est relevée vers sa position stockée, les trappes 4a, 4b suivent le mouvement inverse. Elles commencent donc par s'ouvrir jusqu'à ce que l'atterrisseur arrive dans la position intermédiaire de la figure 2, puis se fermer lorsque l'atterrisseur arrive en position stockée. De nouveau, une tension est maintenue dans les bielles 25a, 25b lorsque les trappes 4a, 4b sont en position fermée.

Ainsi, la liaison mécanique permanente de l'invention transforme un mouvement de pivotement continu sans rebroussement du panneau 12 de contrefiche 10 en un mouvement de va et vient généré par le levier générateur 20, et transmis aux trappes 4a, 4b pour qu'elles s'ouvrent et se ferment à chaque fois que l'atterrisseur transite d'une position à une autre.

L'invention n'est pas limitée à ce qui vient d'être décrit, mais englobe au contraire toute variante entrant dans le cadre défini par les revendications.

En particulier, Bien que dans l'exemple illustré, le levier générateur de la liaison mécanique permanente est relié à un point fixe de la structure de l'aéronef, ce point fixe n'est pas une nécessité, et d'autres cinématiques pourront être prévues dans le cadre de l'invention, ne nécessitant pas un tel point fixe. On peut par exemple atteler la biellette de retenue au caisson de l'atterrisseur, ou toute autre partie de l'atterrisseur, si une telle disposition permet de générer le mouvement de va et vient nécessaire à l'ouverture et la fermeture des trappes.

En outre, il sera envisageable, dans le cadre de l'invention, de se passer de levier de renvoi, s'il est possible d'atteler directement les trappes au levier générateur.

Bien sûr, d'autres liaisons mécaniques permanentes entre l'atterrisseur et les trappes pourront être utilisées, du moment qu'elles génèrent un mouvement alternatif de va et vient propre à permettre l'ouverture et la fermeture des trappes (ou de la trappe s'il n'y en n'a qu'une) de la soute d'atterrisseur. Par exemple, on pourra prévoir une manivelle reliée aux portes par une bielle, la manivelle étant liée en rotation à l'un des éléments pivotants de l'atterrisseur avec la démultiplication adéquate, par une bielle, un engrenage ou toute autre liaison en rotation. Comme cela est bien connu, une manivelle est apte à transformer un mouvement de rotation continu en un mouvement alternatif qui peut être exploité pour ouvrir et fermer la ou les trappes.

## Revendications

1. Dispositif de manoeuvre d'au moins une trappe (4a, 4b) d'une soute d'atterrisseur d'aéronef, comprenant :
- un atterrisseur ;
- une trappe de soute d'aéronef ;
le dispositif comportant une liaison mécanique permanente (20, 23, 24, 25a, 25b) attelée à la trappe et à l'atterrisseur, et agencée pour transformer un mouvement de l'atterrisseur entre une position stockée et une position déployée ou inversement en un mouvement de va et vient propre à provoquer une ouverture suivie d'une fermeture de la trappe lors du mouvement de l'atterrisseur entre lesdites positions, **caractérisé en ce que** la liaison permanente comporte un levier générateur (20) articulé sur un élément (12) de l'atterrisseur et destiné à être attelé à un point fixe (22) de l'aéronef de façon à présenter, vis-à-vis de l'élément de l'atterrisseur, un mouvement de va et vient.

2. Dispositif selon la revendication 1, dans lequel le mouvement de va et vient du levier générateur (20) est transmis à un levier de renvoi (23) monté pivotant sur l'élément de l'atterrisseur, le levier de renvoi étant attelé à la trappe.

## Patentansprüche

1. Vorrichtung zur Betätigung mindestens einer Klappe (4a, 4b) eines Flugzeugfahrwerkschachtes, umfassend:
- ein Fahrwerk;
- eine Flugzeugschachtklappe;
wobei die Vorrichtung eine dauerhafte mechanische Verbindung (20, 23, 24, 25a, 25b) umfasst, die an die Klappe und an das Fahrwerk gekoppelt und so ausgebildet ist, dass sie eine Bewegung des Fahrwerks zwischen einer verstauten Position und einer ausgefahrenen Position oder umgekehrt in eine Hin- und Herbewegung umwandelt, die dazu geeignet ist, ein Öffnen gefolgt von einem Schließen der Klappe während der Bewegung des Fahrwerks zwischen den genannten Positionen zu bewirken, **dadurch gekennzeichnet, dass** die dauerhafte Verbindung einen Erzeugerhebel (20) umfasst, der an einem Element (12) des Fahrwerks angelenkt und dazu bestimmt ist, an einen ortsfesten Punkt (22) des Flugzeugs derart gekoppelt zu werden, dass er gegenüber dem Element des Fahrwerks eine Hin- und Herbewegung zeigt.

2. Vorrichtung nach Anspruch 1, wobei die Hin- und Herbewegung des Erzeugerhebels (20) auf einen Umlenkhebel (23) übertragen wird, der drehbar an dem Element des Fahrwerks gelagert ist, wobei der Umlenkhebel an die Klappe gekoppelt ist.

## Claims

1. Device for driving at least one door (4a, 4b) of an aircraft undercarriage bay, comprising:
- an undercarriage;
- an aircraft bay door;
the device comprising a permanent mechanical linkage (20, 23, 24, 25a, 25b) coupled to the door and to the undercarriage and arranged to transform a movement of the undercarriage between a stowed position and a deployed position, or vice versa, into a go-and-return movement suitable for opening and then closing the door during the movement of the undercarriage between said positions, **characterised in that** the permanent linkage comprises a generator lever (20) hinged to an element (12) of the undercarriage and intended to be coupled to a stationary point (22) of the aircraft so as to present a go-and-return movement relative to the undercarriage element.

2. Device according to claim 1, wherein the go-and-return movement of the generator lever (20) is transmitted to a rocker lever (23), pivotally mounted on the undercarriage element, the rocker lever being coupled to the door.
